# EUROPÄISCHE PATENTSCHRIFT

(11) **EP 4 114 696 B1**
(45) Veröffentlichungstag und Bekanntmachung des Hinweises auf die Patenterteilung: **26.02.2025**
(21) Anmeldenummer: 21712418.9
(22) Anmeldetag: 01.03.2021
(51) Int. Cl.: B60T 7/04, B60T 7/08, B60T 7/12, B60T 8/1755, B60T 8/88, B60T 8/92, B60T 13/74, B60T 17/22

(54) **BREMSANLAGE MIT REDUNDANTER PARKBREMSENANSTEUERUNG**
BRAKING SYSTEM WITH REDUNDANT CONTROL OF THE PARKING BRAKE
SYSTEME DE FREINAGE AVEC CONTROLE REDONDANTE DU FREIN DE STATIONNEMENT

(30) Priorität: 06.03.2020 DE 102020202919
(43) Veröffentlichungstag der Anmeldung: 11.01.2023
(73) Patentinhaber: Continental Automotive Technologies GmbH, 30175 Hannover (DE)
(72) Erfinder: BRENN, Martin, 60488 Frankfurt am Main (DE); ULLRICH, Thorsten, 60488 Frankfurt am Main (DE)
(74) Vertreter: Continental Corporation
(86) Internationale Anmeldenummer: PCT/DE2021/200026
(87) Internationale Veröffentlichungsnummer: WO 2021/175385

(56) Entgegenhaltungen:
- EP-A1- 3 529 117
- EP-B1- 3 529 117
- WO-A1-2019/197555
- DE-A1- 102006 053 617
- DE-A1- 102007 036 259
- DE-A1- 102011 084 534
- DE-A1- 102016 015 544
- DE-A1- 102016 210 984
- DE-A1- 102017 001 657
- DE-A1- 102017 003 650
- DE-A1- 102017 204 157
- DE-A1- 102017 209 314
- DE-A1- 102018 205 811

## Beschreibung

Die Erfindung betrifft eine Bremsanlage für ein Kraftfahrzeug aufweisend einen ersten Parkbremsaktuator und einen zweiten Parkbremsaktuator und ein erstes Steuergerät und ein zweites Steuergerät.

Bremsanlagen weisen häufig zwei Steuergeräte für eine hydraulische Betriebsbremse auf, wobei auf dem ersten Steuergerät im fehlerfreien Betrieb die Ansteuerung zum Druckaufbau in der hydraulischen Betriebsbremse implementiert ist und auf dem zweiten Steuergerät ein Stabilitätsprogramm (ESC) implementiert ist. **In** hoch redundanten Systemen, wie Sie für autonomes Fahren benötigt werden, werden ebenfalls zwei getrennte Steuergeräte verwendet, wobei in einem ersten Steuergerät alle Funktionen implementiert sind, und das zweite Steuergerät eine reduzierte Funktionalität für den Fehlerfall bereithält. Auch eine andere Verteilung von Funktionalitäten auf zwei Steuergeräte ist möglich.

Die beiden Parkbremsaktuatoren sind typischerweise an den Rädern einer Fahrzeugachse, beispielsweise der Hinterachse, angeordnet und werden entweder vom ersten Steuergerät oder vom zweiten Steuergerät angesteuert.

Nach heutigem Stand der Technik wird neben der Parkbremse auch eine Getriebesperrklinke genutzt, welche das Fahrzeug dauerhaft im Stillstand halten kann. Bei Ausfall eines einzelnen Bauteils des Steuergeräts der Parkbremsaktuatoren, wie des Mikroprozessors, der Stromversorgung oder des Treibers, sind beide Parkbremssättel nicht mehr verfügbar. Jedoch wird das Fahrzeug durch die Getriebeklinke noch sicher im Stillstand gehalten. Die Kosten für eine solche Getriebeklinke sind jedoch außergewöhnlich hoch. Insbesondere im Zuge der Elektrifizierung der Fahrzeuge werden Getriebe auf die Anforderungen der verwendeten Elektromotoren angepasst, wobei durch einen Entfall der Getriebeklinke signifikante Kosten im gesamten Verbund gespart werden können.

Ein einfacher Entfall der Getriebeklinke ist aus obigen Gründen jedoch nicht bevorzugt, da bei Ausfall der Parkbremssättel, das Fahrzeug unkontrolliert wegrollen könnte.

Aus der WO 2019/197555 A1 ist eine hydraulische Kraftfahrzeugbremsanlage bekannt, welche mittels zweier Funktionseinheiten samt Steuergeräten eine elektrische Redundanz aufweist. Die zwei offenbarten Parkbremsen EPB1 und EPB2 können redundant von beiden Steuergeräten angesteuert werden. Die Kraftfahrzeugbremsanlage kann Stabilitätsregelfunktionen, Bremskraftverstärkerfunktionen und Basisbremsfunktionen ausführen, bei denen auch die Aktuatoren der Parkbremsen genutzt werden.

Die DE 10 2016 015 544 A1 offenbart ebenfalls ein redundantes Bremssystem mit zwei Parkbremsaktuatoren. Die dortige ECU weist zwei Prozessoreinheiten 202, 204 auf, die ECU besitzt jedoch nur eine gemeinsame Treiberschaltung. Zur wahlweisen Ansteuerung der Parkbremsaktuatoren durch die beiden Prozessoren, weist die ECU einen Multiplexer auf.

Auch aus der DE 10 2017 003 650 A1 ist eine hydraulische Kraftfahrzeugbremsanlage mit Redundanz bekannt. Die Ansteuerung von zwei Parkbremsaktuatoren ist auf zwei Steuergeräte verteilt. Die Parkbremsaktuatoren werden bei Funktionsausfall angesteuert, um Regelfunktionen abbilden zu können.

Es ist somit Aufgabe der vorliegenden Erfindung, eine Bremsanlage zu schaffen, welche ohne das Vorsehen einer Getriebeklinke das unkontrollierte Wegrollen des Fahrzeugs redundant und somit sicher verhindert.

Die Aufgabe wird gelöst durch eine Bremsanlage gemäß Anspruch 1, wobei auf dem ersten Steuergerät und dem zweiten Steuergerät jeweils ein Treiber zur Ansteuerung zumindest des ersten und/oder des zweiten Parkbremsaktuators vorgesehen ist. Insbesondere ist der erste Treiber des ersten Steuergeräts zumindest zum Ansteuern des ersten Parkbremsaktuators ausgebildet und der zweite Treiber des zweiten Steuergeräts zur Ansteuerung des zweiten Parkbremsaktuators. Der erste und der zweite Parkbremsaktuator sind daher ansteuerbar mit den jeweiligen Treibern des oder der zugeordneten Steuergeräte verbunden und der Treiber dazu eingerichtet, den zumindest einen Parkbremsaktuator anzusteuern.

Die erste Steuereinheit kann dabei im fehlerfreien Fall zum Bremsdruckaufbau einer hydraulische Betriebsbremse eingerichtet sein. Die zweite Steuereinheit kann dazu eingerichtet sein, bei Auftreten eines Fehlers in der ersten Steuereinheit, die Ansteuerung zum Bremsdruckaufbau der hydraulischen Betriebsbremse zu übernehmen.

Das erste Steuergerät weist weiter eine erste Arbitrierungseinheit auf, welche dazu eingerichtet ist erste Parkbremsanforderungsdaten zu empfangen und aus den empfangenen ersten Parkbremsanforderungsdaten zu ermitteln, ob eine Parkbremsaktion durchgeführt werden soll. Parkbremsanforderungsdaten können Daten sein, welche für das Anspannen und/oder Lösen der Parkbremse von Bedeutung sind. Typische Parkbremsanforderungsdaten sind ein Signal eines Parkbremsschalters, ein externes Betätigungssignal, Fahrzeuggeschwindigkeitsdaten von Raddrehzahlsensoren oder aus anderen Quellen, Sensordaten zur Türöffnung, der Zustand des Fahrzeugschlüssels (bspw. Key-Out), Zündungsstatus, Gaspedalstellung und viele mehr.

Das zweite Steuergerät weist eine zweite Arbitrierungseinheit auf, welche ebenfalls dazu eingerichtet ist Parkbremsanforderungsdaten zu empfangen und aus den empfangenen Parkbremsanforderungsdaten zu ermitteln, ob eine Parkbremsaktion durchgeführt werden soll. Diese zweiten Parkbremsanforderungsdaten der zweiten Arbitrierungseinheit können aus der gleichen Gruppe von Daten ausgewählt sein wie die ersten Parkbremsanforderungsdaten, wobei die zweiten Parkbremsanforderungsdaten der zweiten Arbitrierungseinheit zumindest teilweise identisch oder unterschiedlich zu den ersten Parkbremsanforderungsdaten der ersten Arbitrierungseinheit sein können. Das Ergebnis der zweiten Arbitrierungseinheit wird der ersten Arbitrierungseinheit eingangsseitig als Teil derer Parkbremsanforderungsdaten zugeführt und das Ergebnis der ersten Arbitrierungseinheit wird an den Treiber des ersten und/oder des zweiten Steuergeräts zur Ansteuerung des ersten und/oder des zweiten Parkbremsaktuators übermittelt. Durch die Aufteilung der Ansteuerung des ersten und des zweiten Parkbremsaktuators auf zwei Steuergeräte wird eine Redundanz hergestellt. Bei Ausfall eines Steuergeräts ist immer zumindest noch ein Parkbremsaktuator einsatzfähig und kann das Wegrollen des Kraftfahrzeugs verhindern. So ist eine Getriebeklinke nicht weiter nötig, wodurch Kosteneinsparungen realisiert werden können. Durch die unabhängigen Arbitrierungseinheiten des ersten und des zweiten Steuergeräts, welche erfindungsgemäß nacheinander geschaltet sind, ergibt sich trotz der Aufteilung auf die zwei Steuergeräte ein einziger Entscheidungspunkt (single point of decision). Somit werden Steuerungsfehler, welche durch widersprüchliche Ansteuerung entstehen können, gänzlich ausgeschlossen und die Verfügbarkeit des Gesamtsystems erhöht.

In einer bevorzugten Ausführungsform der Erfindung ist ein Parkbremsschalter vorgesehen, dessen Schaltzustand als Teil der ersten und/oder zweiten Parkbremsanforderungsdaten der ersten Arbitrierungseinheit und/oder der zweiten Arbitrierungseinheit zugeführt wird. Um den Schaltzustand beiden Arbitrierungseinheiten zuzuführen, kann der Parkbremsschalter beispielsweise als Doppelschalter ausgeführt sein. Dabei ist ein mechanisch betätigbares Element intern mit zwei elektrischen Schaltern gekoppelt, welche jeweils, zur Zuführung eines Signals an eine Arbitrierungseinheit, mit dieser verbunden sind. Die beiden internen elektrischen Schalter können dabei galvanisch getrennt ausgeführt sein. In einer weiteren bevorzugten Ausführungsform der Erfindung ist der Treiber des ersten Steuergeräts nur zur Ansteuerung des ersten Parkbremsaktuators eingerichtet und der Treiber des zweiten Steuergeräts ist nur zur Ansteuerung des zweiten Parkbremsaktuators eingerichtet. In diesem Fall wird das Ergebnis der ersten Arbitrierungseinheit an den Treiber des ersten und des zweiten Steuergeräts zur Ansteuerung des ersten und des zweiten Parkbremsaktuators übermittelt, sodass beide Treiber ihre entsprechend zugeordneten Parkbremsaktuatoren entsprechend des Ergebnisses der ersten Arbitrierungseinheit ansteuern können. Bei Ausfall eines der Steuergeräte bleibt somit die Stellfähigkeit des an dem anderen Steuergerät angeschlossenen Parkbremsaktuators verfügbar. Da nur noch ein Parkbremsaktuator verfügbar ist, führt dies zwar zu einer reduzierten Hanghaltefähigkeit, welche jedoch ausreichend ist, um die gesetzlichen Anforderungen und Normen zu erfüllen, sodass auch in diesem Fall ein Getriebeklinkenentfall stattfinden kann. Diese Ausführungsform bildet eine besonders kostengünstige Variante, da nur die minimalste Anzahl an Steuerleitungen benötigt wird.

In einer alternativen Ausführung der Erfindung sind die Treiber des ersten Steuergeräts und des zweiten Steuergeräts jeweils zur Ansteuerung des ersten und des zweiten Parkbremsaktuators eingerichtet. Beide Parkbremsaktuatoren werden somit jeweils von beiden Steuergeräten angesteuert. Bei Ausfall eines Steuergeräts bleibt somit die Stellfähigkeit der beiden Parkbremsaktuatoren erhalten. Dies führt zu einer vollen Hanghaltefähigkeit, solange nicht einer der Parkbremsaktuatoren selbst ausgefallen ist. Somit kann das Fahrzeug selbst im Fehlerfall auch an steilen Hängen sicher gehalten werden. Diese Ausführungsform bildet daher eine besonders sichere Variante.

In einer weiteren bevorzugten Ausführungsform der Erfindung bestimmen beide Steuergeräte den Zustand der jeweils zugeordneten Parkbremsaktuatoren und übermitteln den bestimmten Zustand dem jeweils anderen Steuergerät. Die Zustände können dabei angespannt (clamped), gelöst (released), unbekannt (unknown) oder andere Zustände umfassen. Dabei können insbesondere im ersten und/oder zweiten Steuergerät die Zustände der beiden Parkbremsaktuatoren zu einem Gesamtzustand kombiniert werden. Somit können die Parkbremsfunktionen und etwaige zugeordnete Fahrerinformationsmeldungen entsprechend reagieren. Beispielsweise können blinkende Warnlampen für Fehler oder permanent leuchtende Kontrollleuchten für erfolgreiches Zuspannen beider elektronischer Bremssättel aktiviert werden.

Bei einer weiteren bevorzugten Ausführungsform der Erfindung sind das erste Steuergerät und das zweite Steuergerät über eine separate Kommunikationsleitung und/oder über einen Fahrzeugbus miteinander verbunden und die Steuergeräte dazu eingerichtet über diese Kommunikationsleitung zu kommunizieren. Eine separate Kommunikationsleitung ist dabei unabhängig von einem Fahrzeugbus. Dadurch wird sichergestellt, dass die beiden Steuergeräte alle für den einwandfreien Betrieb notwendigen Informationen miteinander austauschen können.

In einer besonders bevorzugten Ausführungsform tauschen das erste Steuergerät und das zweite Steuergerät, insbesondere gegenseitig, Verfügbarkeitsinformationen aus, wobei das zweite Steuergerät von einem Ausfall des ersten Steuergeräts ausgeht, wenn die Verfügbarkeitsinformation keine Verfügbarkeit anzeigt und/oder keine Verfügbarkeitsinformationen empfangen werden. Da die Steuergeräte somit über die Verfügbarkeit des jeweils anderen Steuergeräts Bescheid wissen, könne diese bei Ausfall eines Steuergeräts entsprechend reagieren.

In einer besonders bevorzugten Ausführungsform der Erfindung ist die zweite Arbitrierungseinheit dazu eingerichtet, bei Ausfall des ersten Steuergeräts das Ergebnis der Arbitrierung an den Treiber des zweiten Steuergeräts zur Ansteuerung des zumindest einen Parkbremsaktuators zu übermitteln. Wenn das zweite Steuergerät keine Verfügbarkeitsinformationen des ersten Steuergeräts erhält oder von diesem angezeigt bekommt, dass das erste Steuergerät nicht verfügbar ist, so steuert das zweite Steuergerät über den eigenen Treiber direkt die dort angeschlossenen Parkbremsaktuatoren an. Somit kann das zweite Steuergerät auch bei völligem Ausfall des ersten Steuergeräts zuverlässig zumindest einen Parkbremsaktuator ansteuern. Das zweite Steuergerät kann mit einem zusätzlichen redundanten Schalter, einer alternativen Menschmaschineschnittstelle, wie beispielsweise einem alternativen Schalter, den der Fahrer über den Bordcomputer bedienen kann, verbunden sein, deren Daten als zweite Parkbremsanforderungsdaten der zweiten Arbitrierungseinheit zugeführt werden. Außerdem kann eine automatische Bedingung in der Arbitrierungseinheit implementiert sein, welche beispielsweise bei deaktivierter Zündung die Parkbremse anzieht oder beim Losfahren die Parkbremse löst.

In einer bevorzugten Ausführungsform der Erfindung ist zumindest ein Parkbremsaktuator mit dem ersten und dem zweiten Steuergerät ansteuerbar verbunden. Erstes und zweites Steuergerät sind dann dazu eingerichtet die Berechtigung zur Ansteuerung des Parkbremsaktuators, der mit dem ersten und dem zweiten Steuergerät ansteuerbar verbunden ist, durch Austausch eines Tokens zu übergeben. Eine Übergabe des Tokens kann dann stattfinden sobald ein Fehler in dem ersten Steuergerät, im Ansteuerpfad oder in einem der beiden Parkbremsaktuatoren festgestellt wird. Das Steuergerät mit dem Token steuert die Parkbremsaktuatoren so an, als sei es das einzige Steuergerät im Verbund. Damit wird vermieden, dass beide Steuergeräte gleichzeitig auf einen Parkbremsaktuator zugreifen möchten und dabei gegebenenfalls widersprüchliche Ansteuerversuche unternehmen.
in einer bevorzugten Ausführungsform der Erfindung ist das erste und/oder das zweite Steuergerät dazu eingerichtet, nur dann den Parkbremsaktuator anzusteuern, wenn das Steuergerät selbst das Token besitzt und das andere Steuergerät das Token nicht besitzt. Somit ist sichergestellt, dass immer nur eines der beiden Steuergeräte aktiv sein kann, während das andere Steuergerät keine Aktivität ausführen kann. Insbesondere mögliche Überschneidungen bei der Übergabe des Tokens werden somit vermieden, da der Zugriff erst erfolgen kann, sobald die Übergabe des Tokens vollständig abgeschlossen ist. Dies verhindert, dass beispielsweise bei einem Befehl zum Festziehen der Parkbremse (Apply-Request) durch das erste Steuergerät und einem gleichzeitigen Befehl zum Lösen (Release-Request) durch das zweite Steuergerät ein Kurzschluss auftreten könnte.

In einer besonders bevorzugten Ausführungsform der Erfindung erhält bei einem Einschaltvorgang, beispielsweise dem Hochfahren der Steuergeräte nach Einschalten der Zündung des Kraftfahrzeugs, das erste oder das zweite Steuergerät das Token, welches zur Ansteuerung des Parkbremsaktuators, der mit dem ersten und dem zweiten Steuergerät ansteuerbar verbunden ist, berechtigt. Das andere Steuergerät erhält entsprechend kein Token. Somit ist von Beginn an klar definiert, welches der Steuergeräte auf die Parkbremsaktuatoren zugreifen darf.

In einer bevorzugten Ausführungsform der Erfindung sind vier Raddrehzahlsensoren vorgesehen, die jeweils einem von vier Rädern des Kraftfahrzeugs zugeordnet sind, wobei das erste oder das zweite Steuergerät Daten von allen vier Raddrehzahlsensoren erhält und das andere Steuergerät Daten von nur zwei Raddrehzahlsensoren erhält. Die Raddrehzahlsensoren können zur Stillstandsbestimmung des Kraftfahrzeugs genutzt werden, um die Parkbremse nur dann anzuziehen, wenn sich das Fahrzeug im Stillstand befindet. Somit wird vermieden, dass durch ein fehlerhaftes aktivieren der Parkbremsen während der Fahrt eine Gefahrensituation entsteht. Durch die redundante Steuerung der Parkbremsen genügt es, wenn für das zweite Steuergerät nur zwei der vier Drehzahlsensoren zur Verfügung stehen, da für den seltenen Ausfall eines Steuergeräts eine Stillstandsbestimmung mittels zwei Raddrehzahlsensoren ausreichend ist.

In einer besonders bevorzugten Ausführungsform der Erfindung ist dazu ein Multiplexer für die Daten von zwei Raddrehzahlsensoren vorgesehen, welcher im fehlerfreien Fall die Daten der zwei Raddrehzahlsensoren dem Steuergerät zuführt, welches Daten von allen vier Raddrehzahlsensoren erhält, und nur bei Ausfall dieses Steuergeräts die Daten der zwei Raddrehzahlsensoren dem Steuergerät zuführt, welches Daten von nur zwei Raddrehzahlsensoren erhält. Somit liegen dem Steuergerät, welches für die Ansteuerung der Parkbremsaktuatoren zuständig ist, immer zumindest Informationen über zwei Raddrehzahlsensoren vor, sodass der Stillstand des Fahrzeugs verifiziert werden kann.

In einer weiteren besonders bevorzugten Ausführungsform der Erfindung sind die zwei Raddrehzahlsensoren des Multiplexers diagonal zueinander angeordneten Rädern zugeordnet. Durch eine solche Verteilung der überprüften Räder, kann besonders sicher der Fahrzeugstillstand nachgewiesen werden.

Die Aufgabe wird außerdem gelöst durch ein erfindungsgemäßes Verfahren zur Regelung einer Bremsanlage gemäß Anspruch 15, mit zwei Parkbremsaktuatoren und zwei Steuergeräten, wobei eine erste Arbitrierungseinheit des ersten Steuergeräts erste Parkbremsanforderungsdaten empfängt und aus den empfangenen ersten Parkbremsanforderungsdaten ermittelt, ob eine Parkbremsaktion durchgeführt werden soll, und eine zweite Arbitrierungseinheit des zweiten Steuergeräts Parkbremsanforderungsdaten empfängt und aus den empfangenen zweiten Parkbremsanforderungsdaten ermittelt, ob eine Parkbremsaktion durchgeführt werden soll, wobei das Ergebnis der zweiten Arbitrierungseinheit der ersten Arbitrierungseinheit eingangsseitig als erste Parkbremsanforderungsdaten zugeführt wird und wobei das Ergebnis der ersten Arbitrierungseinheit an einen Treiber des ersten und/oder des zweiten Steuergeräts zur Ansteuerung der Parkbremsaktuatoren übermittelt wird.

Die vorstehend für die erfindungsgemäße Bremsanlage beschriebenen bevorzugten Ausführungsformen bilden entsprechend auch für das erfindungsgemäße Verfahren bevorzugte Ausführungsformen.

Weitere Merkmale, Vorteile und Anwendungsmöglichen der Erfindung ergeben sich auch durch die nachfolgende Beschreibung von Ausführungsbeispielen und der Zeichnungen. Dabei gehören alle beschriebenen und/oder bildlich dargestellten Merkmale sowohl einzeln als auch in beliebiger Kombination zum Gegenstad der Erfindung, auch unabhängig von ihrer Zusammenfassung in den Ansprüchen oder deren Rückbezügen.
Figur 1 zeigt eine schematische Darstellung einer ersten Ausführungsform der Erfindung,
Figur 2 zeigt eine schematische Darstellung einer zweiten Ausführungsform der Erfindung,
Figur 3 zeigt eine schematische Darstellung der Kommunikationspfade der Ausführungsform der Figur 1 und Figur 2,
Figur 4 zeigt ein Diagramm eines erfindungsgemäßen Tokenaustauschs,
Figur 5 zeigt die Verteilung der Raddrehzahlsensorsignale einer Ausführungsform der Erfindung,
Figur 6 zeigt die Verteilung der Raddrehzahlsensorensignale einer weiteren Ausführungsform der Erfindung,

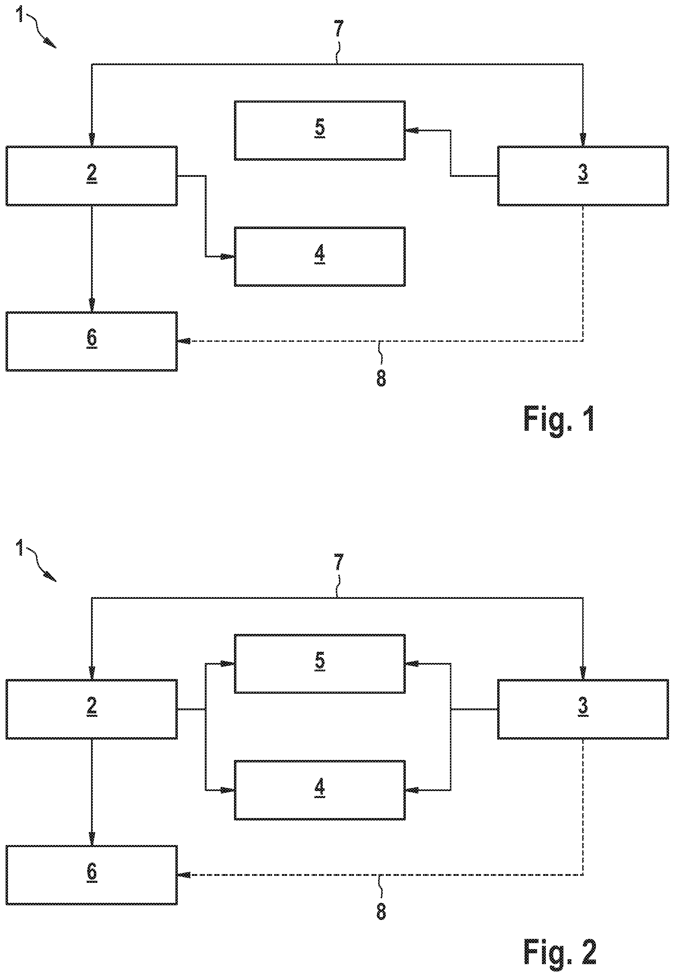

In der in Figur 1 dargestellten Ausführungsform der Erfindung ist ein erstes Steuergerät 2 als Hauptsteuergerät (Main ECU) ausgeführt, welches die Ansteuerung einer hydraulischen Bremseinheit 6 übernimmt, die als Betriebsbremse eines Kraftfahrzeugs ausgebildet ist. Das erste Steuergerät 2 kann insbesondere Befehle zum Druckaufbau in der hydraulischen Bremseinheit 6 geben. Das erste Steuergerät 2 ist darüber hinaus zum Ansteuern einer ersten elektronischen Parkbremse (EPB) mit einem entsprechenden Parkbremsaktuator 4 eingerichtet und mit dieser verbunden. Das erste Steuergerät 2 weist keine direkte Verbindung zu der zweiten elektronischen Parkbremse auf, um diese anzusteuern.

Das zweite Steuergerät 3 (Secondary ECU) ist zum Ansteuern einer zweiten elektronischen Parkbremse mit dem entsprechenden Parkbremsaktuator 5 eingerichtet und mit dieser verbunden. Das zweite Steuergerät 3 weist keine direkte Verbindung zu der ersten elektronischen Parkbremse auf, um diese anzusteuern.

Das zweite Steuergerät 3 weist darüber hinaus eine redundante Hydraulikansteuerung 8 auf, mit der bei Ausfall der ersten Steuereinheit 2 die hydraulische Bremseinrichtung 6 angesteuert werden kann. Im fehlerfreien Betrieb ist die redundante Hydrauliksteuerung 8 inaktiv.

Eine Kommunikationsleitung 7 verbindet das erste Steuergerät 2 und das zweite Steuergerät 3, um eine sichere Kommunikation zwischen den beiden Steuergeräten 2, 3 zu garantieren.

Bei Ausfall eines der Steuergeräte 2, 3 kann daher zumindest immer einer der beiden elektronischen Parkbremsaktuatoren 4, 5 angesteuert werden. Somit wird zumindest eine geringe Hanghaltefähigkeit sichergestellt.

Figur 2 zeigt eine alternative Ausführungsform der Erfindung. Gleichartige Bauteile sind dabei mit den gleichen Bezugszeichen wie in der ersten Ausführungsform der Fig. 1 versehen. Das erste Steuergerät 2, welches zur Steuerung der hydraulischen Bremseinheit 6 eingerichtet ist, ist zur Ansteuerung beider Parkbremsen mit den zugehörigen Parkbremsaktuatoren 4, 5 eingerichtet und mit diesen ansteuerbar verbunden. Auch das zweite Steuergerät 3 ist mit beiden elektronischen Parkbremsen mit den zugehörigen Parkbremsaktuatoren 4, 5 verbunden und dazu eingerichtet die beiden Parkbremsaktuatoren 4, 5 anzusteuern. Auch in dieser Ausführungsform ist eine Kommunikationsleitung 7 vorgesehen, welche den Informationsaustausch zwischen dem ersten Steuergerät 2 und dem zweiten Steuergerät 3 ermöglicht. Die Kommunikationsleitung 7 ist als separate Kommunikationsleitung 7 ausgeführt, kann jedoch auch beispielsweise als Fahrzeugbus ausgeführt sein. Das zweite Steuergerät 3 ist wiederum aus Redundanzgründen zur Ansteuerung 8 der hydraulischen Bremseinheit 6 geeignet. In dieser Ausführungsform sind auch bei Ausfall eines der beiden Steuergeräte 2, 3 beide Parkbremsaktuatoren 4, 5 voll einsatzbereit, sodass eine volle Hanghaltefähigkeit bereitgestellt werden kann.

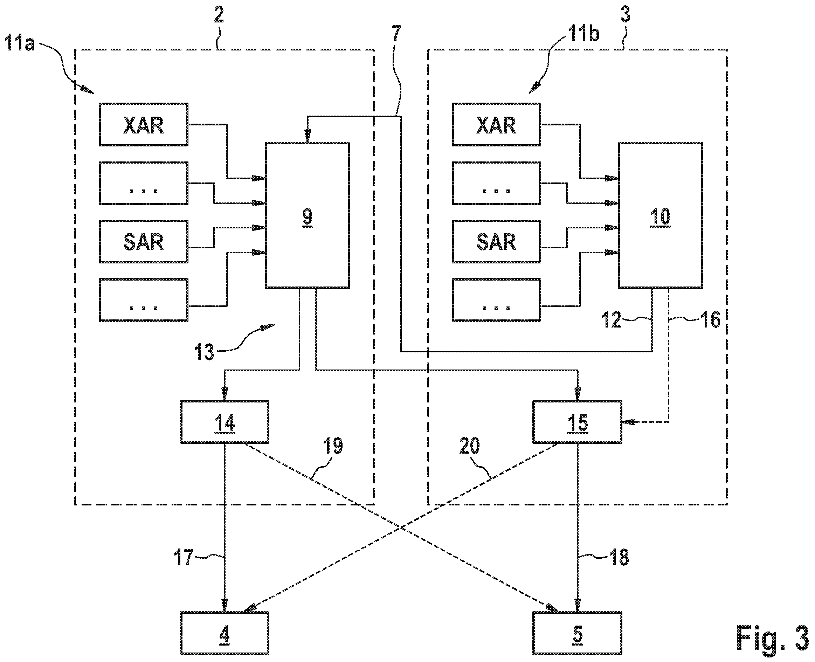

Figur 3 zeigt schematisch den Aufbau der beiden Steuergeräte 2, 3 und der entsprechenden Kommunikationspfade.

In dem zweiten Steuergerät 3 ist eine zweite Arbitrierungseinheit 10 vorgesehen, welche basierend auf den zur Verfügung gestellten Parkbremsanforderungsdaten 11b ermittelt, ob ein EPB-Request (Electronic Parking Brake Request) erforderlich ist, das heißt, ob eine Ansteuerung der Parkbremsaktuatoren 4, 5 erforderlich ist. Als Parkbremsanforderungsdaten 11b werden der zweiten Arbitrierungseinheit 10 zumindest das Signal eines Parkbremsschalters (SAR - Static Apply Release) und ein möglicher externer Parkbremsbefehl (XAR - External Apply Release) zugeführt. Das Ergebnis der zweiten Arbitrierung 12 wird über die Kommunikationsleitung 7 an das erste Steuergerät 2 übermittelt, und dort der ersten Arbitrierungseinheit 9 als Teil derer Parkbremsanforderungsdaten 11a zugeführt.

Auch der ersten Arbitrierungseinheit 9 werden als Parkbremsanforderungsdaten 11a darüber hinaus zumindest das Signal eines Parkbremsschalters (SAR) und ein möglicher externer Parkbremsbefehl (XAR) zugeführt. Es ist jedoch auch möglich, das Signal des Parkbremsschalters und/oder einen möglichen externen Parkbremsbefehl jeweils nur einer der beiden Arbitrierungseinheiten 9, 10 zuzuführen, da auch in diesem Fall, durch die Hintereinanderschaltung der beiden Arbitrierungseinheiten 9, 10 auf jeden Fall alle Parkbremsanforderungsdaten 11 in Betracht gezogen werden. Die erste Arbitrierungseinheit 9 ermittelt aus sämtlichen Parkbremsanforderungsdaten 11a inklusive des Ergebnisses 12 der zweiten Arbitrierung ob ein EPB-Request erforderlich ist. Dieses Ergebnis wird an den ersten Treiber 14 des ersten Steuergeräts 2 übertragen, welcher ein mechatronisches Subsystem zur Ansteuerung von Parkbremsaktuatoren bildet. Das Ergebnis wird außerdem an den zweiten Treiber 15 des zweiten Steuergeräts 3 übertragen, welcher ebenfalls ein mechatronisches Subsystem zur Ansteuerung von Parkbremsaktuatoren bildet

In der ersten Ausführungsform der Figur 1 ist der erste Treiber 14 lediglich über eine Steuerleitung 17 mit dem ersten Parkbremsaktuator 4 verbunden und der zweite Treiber 15 lediglich über eine Steuerleitung 18 mit dem zweiten Parkbremsaktuator 5 verbunden. Die Querverbindungen 19, 20 existieren in dieser Ausführungsform nicht.

Das ermittelte EPB-Request wird somit auf beiden elektronischen Parkbremsaktuatoren 4, 5 ausgeführt.

Tritt ein Fehler in einem der beiden Steuergeräte 2, 3 auf, so bleibt das System zumindest teilweise funktionsfähig. Bei einem totalen Ausfall des zweiten Steuergeräts 3 empfängt das erste Steuergerät 2 kein Ergebnis 12 der zweiten Arbitrierungseinheit 10 über die Kommunikationsleitung 7. Die erste Arbitrierungseinheit 9 kann jedoch basierend auf den übrigen Parkbremsanforderungsdaten 11a eine Arbitrierung durchführen. Das Ergebnis 13 der Arbitrierung kann auch in diesem Fall zumindest an den Treiber 14 zur Ansteuerung des ersten Parkbremsaktuators 4 übermittelt werden.

Fällt hingegen das erste Steuergerät 2 aus, so teilt das erste Steuergerät 2 dies dem zweiten Steuergerät 3 über die Kommunikationsleitung 7 mit. Dies kann entweder durch eine explizite Mitteilung stattfinden, oder durch Nichtversenden einer Verfügbarkeitsinformation. Das zweite Steuergerät 3 geht von einem Ausfall des ersten Steuergeräts 2 aus, wenn es keine Verfügbarkeitsinformationen des ersten Steuergeräts 2 über die Kommunikationsleitung 7 erhält. **In** diesem Fall führt das zweite Steuergerät 3 ebenfalls eine Arbitrierung in der zweiten Arbitrierungseinheit 10 basierend auf den Parkbremsanforderungsdaten 11b durch und übermittelt dieses Ergebnis 12 der Arbitrierung jedoch nicht an das erste Steuergerät 2, sondern gibt das Ergebnis direkt als redundante Parkbremsansteuerung 16 an den Treiber 15 weiter. Der Treiber 15 kann dann zumindest den zweiten Parkbremsaktuator 5 über die Steuerleitung 18 ansteuern. Auch in diesem Fall wird zumindest eine reduzierte Handhaltefähigkeit sichergestellt.

In der Ausführungsform der Figur 2 ist das erste Steuergerät 2 mit dem ersten Treiber 14 über eine Steuerleitung 19 zusätzlich mit der zweiten elektronischen Parkbremse und dem zugehörigen Parkbremsaktuator 5 verbunden. Das zweite Steuergerät 3 ist mit dessen Treiber 15 über eine Steuerleitung 20 zusätzlich mit dem ersten Parkbremsaktuator 4 verbunden. Somit kann jeder Parkbremsaktuator 4, 5 von beiden Steuergeräten 2, 3 angesteuert werden, sodass auch bei Ausfall eines der beiden Steuergeräte 4, 5 beide Parkbremsaktuatoren 4, 5 zur Verfügung stehen.

Um zu verhindern, dass ein Parkbremsaktuator 4, 5 gleichzeitig von zwei Treibern 14, 15 angesteuert wird, insbesondere widersprüchlich angesteuert wird, ist vorgesehen, dass nur eines der beiden Steuergeräte 2, 3 die Berechtigung zum tatsächlichen Ansteuern der elektronischen Parkbremsaktuatoren 4, 5 erhält. Bei einer widersprüchlichen Ansteuerung würde ansonsten ein Parkbremsaktuator 4, 5 über den ersten Treiber 14 mit einer ersten Polarität angesteuert werden und über den zweiten Treiber 15 mit entgegengesetzter Polarität. Dadurch würden die beiden Pole der Spannungsversorgung direkt miteinander verbunden werden, wodurch ein Kurzschluss entstünde. Ein solcher Kurzschluss könnte beide Steuergerät gleichzeitig beschädigen und dadurch zu einem Doppelausfall führen. Die Berechtigung wird dabei durch ein austauschbares Token realisiert.

Die Überprüfung des Tokens kann dabei bereits am Ausgang der ersten Arbitrierungseinheit 9 erfolgen, und die erste Arbitrierungseinheit 9 das Ergebnis 13 der Arbitrierung lediglich an den ersten Treiber 14 übermitteln, wenn das erste Steuergerät 2 selbst das Token besitzt. Besitzt hingegen das zweite Steuergerät 3 das Token, so kann die erste Arbitrierungseinheit 9 das Ergebnis der Arbitrierung 13 lediglich an den zweiten Treiber 15 des zweiten Steuergeräts 3 übermitteln. Alternativ kann das Ergebnis 13 der Arbitrierung von der Arbitrierungseinheit 9 immer an beide Treiber 14, 15 des ersten Steuergeräts 2 bzw. des zweiten Steuergeräts 3 übermittelt werden. Eine Überprüfung, ob das eigene Steuergerät in Besitz des Tokens ist, findet dann erst im Treiber 14, 15 selbst statt. Der Treiber 14, 15 steuert entsprechend die Parkbremsaktuatoren 4, 5 über die Steuerleitung 17, 18, 19, 20 nur dann an, wenn das eigene Steuergerät das Token besitzt.

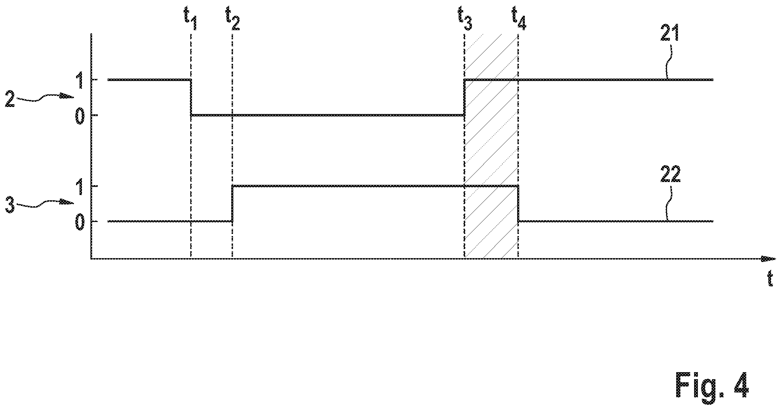

Figur 4 zeigt beispielhaft die Übergabe des Tokens in einem Zeitdiagramm. Sowohl in dem ersten Steuergerät 2 als auch in dem zweiten Steuergerät 3 sind jeweils ein Tokenzustand 21, 22 als binäre Variable implementiert, welche anzeigt, ob das jeweilige Steuergerät das Token besitzt. Der Tokenzustand 21, 22 kann demnach nur die Werte '0' oder '1' annehmen. Zu Beginn bis zum Zeitpunkt t₁ besitzt das erste Steuergerät 2 den Token und der Tokenzustand 21 hat demnach den Wert '1'. Das zweite Steuergerät 3 besitzt keinen Token und der Tokenzustand 22 hat daher den Wert ,0'. Zu einem Zeitpunkt t₁ stellt das erste Steuergerät 2 einen Fehler fest und übergibt daher das Token an das zweite Steuergerät 3. Dazu setzt das erste Steuergerät 2 den eigenen Tokenzustand 21 auf '0' und sendet eine entsprechende Nachricht über die Kommunikationsleitung 7 an das zweite Steuergerät 3. Zu einem Zeitpunkt t₂ empfängt das zweite Steuergerät 3 die entsprechende Nachricht über die Kommunikationsleitung 7 und setzt den eigenen Tokenzustand auf '1'.

Zu einem Zeitpunkt t₃ stellt das erste Steuergerät 2 fest, dass es wieder fehlerfrei funktioniert und übernimmt das Token. Das erste Steuergerät 2 setzt daher den eigenen Tokenzustand 21 auf '1' und sendet über den Kommunikationskanal 7 eine entsprechende Nachricht an das zweite Steuergerät 3. Zu einem Zeitpunkt t₄ empfängt das zweite Steuergerät 3 die entsprechende Nachricht und setzt den eigenen Tokenzustand 22 auf ,0'. Zwischen dem Zeitpunkt t₃ und t₄ haben für eine kurze Zeitspanne sowohl der Tokenzustand 21 des ersten Steuergeräts 2 als auch der Tokenzustand 22 des zweiten Steuergeräts 3 den Wert ,1'. Um in diesem Zeitraum einen doppelten Zugriff auf die Parkbremsaktuatoren 4, 5 zu vermeiden, kann ein Treiber 14, 15 nur auf die Parkbremsaktuatoren 4, 5 zugreifen, wenn das eigene Steuergerät 2, 3 den Token hat, d. h. der Tokenzustand 21, 22 den Wert '1' aufweist und der Tokenzustand 21, 22 des jeweils anderen Steuergeräts 2, 3 den Wert ,0' hat. Im Zeitraum zwischen t₃ und t₄ kann somit keines der Treiber auf die Parkbremsaktuatoren 4, 5 zugreifen.

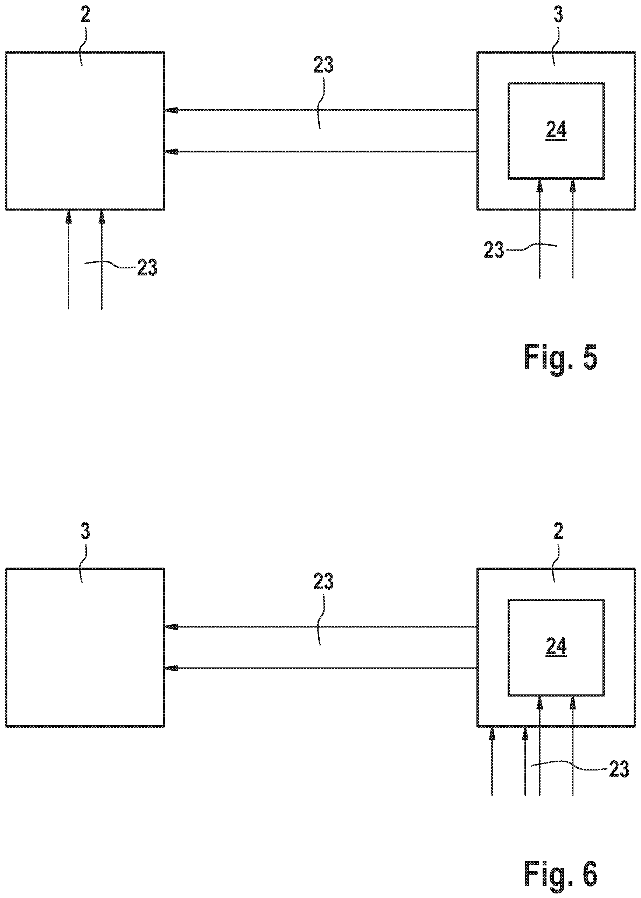

Um zu vermeiden, dass Parkbremsaktuatoren bei fahrendem Fahrzeug aktiviert werden und somit eine Gefahrensituation hervorrufen können, wird vor dem Anziehen der Parkbremsaktuatoren 4, 5 überprüft, ob sich das Fahrzeug im Stillstand befindet. Dazu werden Raddrehzahlsensordaten 23 verwendet. Um sowohl im ersten Steuergerät als auch im zweiten Steuergerät 3 den Fahrzeugstillstand feststellen zu können, werden zwei Raddrehzahlsensordaten 23 über einen Multiplexer 24 verteilt. Eine entsprechende Architektur ist in Figur 5 dargestellt, bei der die Raddrehzahlsensordaten zweier Räder des Fahrzeugs direkt an das erste Steuergerät 2 übermittelt werden und die Raddrehzahlsensordaten 23 der übrigen zwei Räder des Fahrzeugs werden direkt an das zweite Steuergerät 3 übermittelt. Das zweite Steuergerät 3 weist einen Multiplexer 24 auf, welcher das Signal der zwei Raddrehzahlsensoren entweder an die entsprechende Recheneinheit des zweiten Steuergeräts 3 übermitteln kann oder an das erste Steuergerät 2 kommuniziert. Dazu kann der Multiplexer 24 eine direkte Verbindung (hard-wired) an das erste Steuergerät 2 aufweisen. An dem ersten Steuergerät 2 liegen dann die Signale der Raddrehzahlsensoren so an, als seien die Raddrehzahlsensoren direkt an das erste Steuergerät 2 angeschlossen. Der Multiplexer 24 ist derart ausgebildet, dass er im stromlosen Fall, also wenn das eigene Steuergerät 2, 3 einen Defekt aufweist, die Raddrehzahldaten an das andere Steuergerät 2, 3 weiterleitet.

Eine alternative Ausführungsform ist in Figur 6 dargestellt, bei der die Raddrehzahlsignale aller vier Räder zuerst bei dem ersten Steuergerät 2 ankommen. Zwei Raddrehzahlsensoren werden wiederum über den Multiplexer 24 an das zweite Steuergerät 2 weitergeleitet.

In beiden Varianten werden im fehlerfreien Fall dem ersten Steuergerät 2 alle vier Raddrehzahlsensordaten zur Verfügung gestellt, da dieses im fehlerfreien Fall die die eigentliche Ansteuerung der Parkbremsaktuatoren 4, 5 durchführt. Für den selten auftretenden Fehlerfall steht dem zweiten Steuergerät 3 noch zwei Raddrehzahlsensordaten 23 zur Verfügung, um den Stillstand des Fahrzeugs festzustellen.

Durch die erfindungsgemäße Bremsanlage wird sichergestellt, dass auch im Falle des Ausfalls eines der Steuergeräte zumindest eine reduzierte Handhaltefähigkeit zur Verfügung steht, sodass eine Getriebeklinke nicht mehr nötig ist und daher entfallen kann. Dabei ist sichergestellt, dass es immer einen "single point of decision" gibt, um mögliche Steuerfehler auszuschließen.

### Bezugszeichenliste

- 1: Bremsanlage
- 2: Erstes Steuergerät
- 3: Zweites Steuergerät
- 4: Erstes Parkbremsaktuator
- 5: Zweiter Parkbremsaktuator
- 6: Hydraulische Bremseinheit
- 7: Kommunikationspfad
- 8: Redundante Hydrauliksteuerung
- 9: Erste Arbitrierungseinheit
- 10: Zweite Arbitrierungseinheit
- 11: a, b erste und zweite Parkbremsanforderungsdaten
- 12: Arbitrierungsergebnis erste Arbitrierungseinheit
- 13: Arbitrierungsergebnis zweite Arbitrierungseinheit
- 14: Erster Treiber
- 15: Zweiter Treiber
- 16: Redundante Parkbremsansteuerung
- 17: Steuerleitung erster Treiber zu erster Parkbremse
- 18: Steuerleitung zweiter Treiber zu zweiter Parkbremse
- 19: Steuerleitung erster Treiber zu zweiter Parkbremse
- 20: Steuerleitung zweiter Treiber zu erster Parkbremse
- 21: Tokenzustand erstes Steuergerät
- 22: Tokenzustand zweites Steuergerät
- 23: Drehzahlsensordaten
- 24: Multiplexer
- t₁: Zeitpunkt Abgabe Token
- t₂: Zeitpunkt Annahme Token
- t₃: Zeitpunkt Übernahme Token
- t₄: Zeitpunkt Übergabe Token

## Patentansprüche

1. Bremsanlage für ein Kraftfahrzeug aufweisend einen ersten Parkbremsaktuator (4) und einen zweiten Parkbremsaktuator (5) und
ein erstes Steuergerät (2) und ein zweites Steuergerät (3), welche jeweils einen Treiber (14, 15) zur Ansteuerung zumindest des ersten und/oder des zweiten Parkbremsaktuators (4, 5) aufweisen,
wobei das erste Steuergerät (2) eine erste Arbitrierungseinheit (9) aufweist, welche dazu eingerichtet ist erste Parkbremsanforderungsdaten (11a) zu empfangen und aus den empfangenen Parkbremsanforderungsdaten (11a) zu ermitteln, ob eine Parkbremsaktion durchgeführt werden soll,
wobei das zweite Steuergerät (3) eine zweite Arbitrierungseinheit (10) aufweist, welche dazu eingerichtet ist zweite Parkbremsanforderungsdaten (11b) zu empfangen und aus den empfangenen Parkbremsanforderungsdaten (11b) zu ermitteln, ob eine Parkbremsaktion durchgeführt werden soll,
wobei ein Ergebnis der zweiten Arbitrierungseinheit (10) der ersten Arbitrierungseinheit (9) eingangsseitig als Teil der ersten Parkbremsanforderungsdaten (11a) zugeführt wird und
wobei ein Ergebnis der ersten Arbitrierungseinheit (9) an den Treiber (14, 15) des ersten und/oder des zweiten Steuergeräts (2, 3) zur Ansteuerung des ersten und/oder
des zweiten Parkbremsaktuators (4, 5) übermittelt wird.

2. Bremsanlage nach Anspruch 1, **dadurch gekennzeichnet, dass** ein Parkbremsschalter vorgesehen ist, dessen Schaltzustand als Teil der ersten und/oder zweiten Parkbremsanforderungsdaten (11a, 11b) der ersten Arbitrierungseinheit (9) und/oder der zweiten Arbitrierungseinheit (10) zugeführt wird.

3. Bremsanlage nach Anspruch 1 oder 2, **dadurch gekennzeichnet, dass** der Treiber (14) des ersten Steuergeräts (2) nur zur Ansteuerung des ersten Parkbremsaktuators (4) eingerichtet ist und der Treiber (15) des zweiten Steuergeräts (3) nur zur Ansteuerung des zweiten Parkbremsaktuators (5) eingerichtet ist.

4. Bremsanlage nach Anspruch 1 oder 2, **dadurch gekennzeichnet, dass** die Treiber (14, 15) des ersten Steuergeräts (2) und des zweiten Steuergeräts (3) jeweils zur Ansteuerung des ersten und des zweiten Parkbremsaktuators (4, 5) eingerichtet sind.

5. Bremsanlage nach einem der vorhergehenden Ansprüche, **dadurch gekennzeichnet, dass** beide Steuergeräte (2, 3) den Zustand der jeweils zugeordneten Parkbremsaktuatoren (4, 5) bestimmen und den bestimmten Zustand dem jeweils anderen Steuergerät (3, 2) übermitteln, wobei insbesondere im ersten und/oder zweiten Steuergerät (2, 3) die Zustände der beiden Parkbremsaktuatoren (4, 5) zu einem Gesamtzustand kombiniert werden.

6. Bremsanlage nach einem der vorhergehenden Ansprüche, **dadurch gekennzeichnet, dass** das erste Steuergerät (2) und das zweite Steuergerät (3) über eine separate Kommunikationsleitung (7) und/oder über einen Fahrzeugbus miteinander kommunizieren.

7. Bremsanlage nach einem der vorhergehenden Ansprüche, **dadurch gekennzeichnet, dass** das erste Steuergerät (2) und das zweite Steuergerät (3), insbesondere gegenseitig, Verfügbarkeitsinformationen (21, 22) austauschen, wobei das zweite Steuergerät (3) von einem Ausfall des ersten Steuergeräts (2) ausgeht, wenn die Verfügbarkeitsinformation (21, 22) keine Verfügbarkeit anzeigt und/oder keine Verfügbarkeitsinformationen (21, 22) empfangen werden.

8. Bremsanlage nach einem der vorhergehenden Ansprüche, **dadurch gekennzeichnet, dass** die zweite Arbitrierungseinheit (10) dazu eingerichtet ist, bei Ausfall des ersten Steuergeräts (2) das Ergebnis der Arbitrierung an den Treiber (15) des zweiten Steuergeräts (3) zur Ansteuerung des zumindest einen Parkbremsaktuators (5) zu übermitteln.

9. Bremsanlage nach einem der vorhergehenden Ansprüche, **dadurch gekennzeichnet, dass** zumindest ein Parkbremsaktuator (4, 5) mit dem ersten und dem zweiten Steuergerät (2, 3) ansteuerbar verbunden ist, wobei erstes und zweites Steuergerät (2, 3) dazu eingerichtet sind, die Berechtigung zur Ansteuerung des Parkbremsaktuators (4, 5), der mit dem ersten und dem zweiten Steuergerät (2, 3) ansteuerbar verbunden ist, durch Austausch eines Tokens (21, 22) zu übergeben.

10. Bremsanlage nach Anspruch 9, **dadurch gekennzeichnet, dass** bei einem Einschaltvorgang das erste oder das zweite Steuergerät (2, 3) das Token (21, 22) erhält, welches zur Ansteuerung des Parkbremsaktuators (4, 5) der mit dem ersten und dem zweiten Steuergerät (2, 3) ansteuerbar verbunden ist berechtigt, und das andere Steuergerät (3, 2) kein Token (21, 22) erhält.

11. Bremsanlage nach Anspruch 9 oder 10, **dadurch gekennzeichnet, dass** das erste und/oder das zweite Steuergerät (2, 3) dazu eingerichtet sind, nur dann den Parkbremsaktuator (4, 5) anzusteuern, wenn das Steuergerät (2, 3) selbst das Token (21, 22) besitzt und das andere Steuergerät (3, 2) das Token (21, 22) nicht besitzt.

12. Bremsanlage nach einem der vorhergehenden Ansprüche, **dadurch gekennzeichnet, dass** vier Raddrehzahlsensoren (23) vorgesehen sind, die jeweils einem von vier Rädern des Kraftfahrzeugs zugeordnet sind, wobei das erste oder das zweite Steuergerät (2, 3) Daten von allen vier Raddrehzahlsensoren (23) erhält und das andere Steuergerät Daten von nur zwei Raddrehzahlsensoren (23) erhält.

13. Bremsanlage nach Anspruch 12, **dadurch gekennzeichnet, dass** das ein Multiplexer (24) für die Daten von zwei Raddrehzahlsensoren (23) vorgesehen ist, welcher im fehlerfreien Fall die Daten der zwei Raddrehzahlsensoren (23) dem Steuergerät (2, 3) zuführt, welches Daten von allen vier Raddrehzahlsensoren (23) erhält, und nur bei Ausfall dieses Steuergeräts (2, 3) die Daten der zwei Raddrehzahlsensoren (23) dem Steuergerät (2, 3) zuführt, welches Daten von nur zwei Raddrehzahlsensoren (23) erhält.

14. Bremsanlage nach Anspruch 13, **dadurch gekennzeichnet, dass** das die zwei Raddrehzahlsensoren (23) des Multiplexers (24) diagonal zueinander angeordneten Rädern zugeordnet sind.

15. Verfahren zur Regelung einer Bremsanlage (1) mit zwei Parkbremsaktuatoren (4, 5) und zwei Steuergeräten (2, 3), wobei eine erste Arbitrierungseinheit (9) des ersten Steuergeräts (2) erste Parkbremsanforderungsdaten (11a) empfängt und aus den empfangenen ersten Parkbremsanforderungsdaten (11a) ermittelt, ob eine Parkbremsaktion durchgeführt werden soll,
und eine zweite Arbitrierungseinheit (10) des zweiten Steuergeräts (3) zweite Parkbremsanforderungsdaten (11b) empfängt und aus den empfangenen zweiten Parkbremsanforderungsdaten (11b) ermittelt, ob eine Parkbremsaktion durchgeführt werden soll,
wobei ein Ergebnis der zweiten Arbitrierungseinheit (10) der ersten Arbitrierungseinheit (9) eingangsseitig als Teil der ersten Parkbremsanforderungsdaten (11a) zugeführt wird und
wobei ein Ergebnis der ersten Arbitrierungseinheit (9) an einen Treiber (14, 15) des ersten und/oder des zweiten Steuergeräts (2, 3) zur Ansteuerung des ersten und/oder
des zweiten Parkbremsaktuators (4, 5) übermittelt wird.

## Claims

1. Braking system for a motor vehicle having a first parking brake actuator (4) and a second parking brake actuator (5) and a first control device (2) and a second control device (3) which each have a driver (14, 15) for driving at least the first and/or the second parking brake actuator (4, 5),
wherein the first control device (2) has a first arbitration unit (9) which is set up to receive first parking brake request data (11a) and to ascertain from the received parking brake request data (11a) whether a parking brake action should be carried out,
wherein the second control device (3) has a second arbitration unit (10) which is set up to receive second parking brake request data (11b) and to ascertain from the received parking brake request data (11b) whether a parking brake action should be carried out,
wherein a result of the second arbitration unit (10) is fed to the input end of the first arbitration unit (9) as part of the first parking brake request data (11a) and
wherein a result of the first arbitration unit (9) is transmitted to the driver (14, 15) of the first and/or the second control device (2, 3) for driving the first and/or the second parking brake actuator (4, 5).

2. Braking system according to Claim 1, **characterized in that** a parking brake switch is provided, the switching state of which is fed to the first arbitration unit (9) and/or the second arbitration unit (10) as part of the first and/or the second parking brake request data (11a, 11b).

3. Braking system according to Claim 1 or 2, **characterized in that** the driver (14) of the first control device (2) is set up only to drive the first parking brake actuator (4) and the driver (15) of the second control device (3) is set up only to drive the second parking brake actuator (5).

4. Braking system according to Claim 1 or 2, **characterized in that** the drivers (14, 15) of the first control device (2) and the second control device (3) are each set up to drive the first and the second parking brake actuator (4, 5).

5. Braking system according to one of the preceding claims, **characterized in that** both control devices (2, 3) determine the state of the respectively associated parking brake actuators (4, 5) and transmit the determined state to the respective other control device (3, 2), wherein, in particular in the first and/or the second control device (2, 3), the states of the two parking brake actuators (4, 5) are combined to form an overall state.

6. Braking system according to one of the preceding claims, **characterized in that** the first control device (2) and the second control device (3) communicate with one another via a separate communication line (7) and/or via a vehicle bus.

7. Braking system according to one of the preceding claims, **characterized in that** the first control device (2) and the second control device (3), in particular mutually, exchange availability information (21, 22), wherein the second control device (3) assumes that the first control device (2) has failed if the availability information (21, 22) does not indicate availability and/or no availability information (21, 22) is received.

8. Braking system according to one of the preceding claims, **characterized in that** the second arbitration unit (10) is set up to transmit the result of the arbitration to the driver (15) of the second control device (3) for driving the at least one parking brake actuator (5) if the first control device (2) fails.

9. Braking system according to one of the preceding claims, **characterized in that** at least one parking brake actuator (4, 5) is connected in a driveable manner to the first and the second control device (2, 3), wherein the first and the second control device (2, 3) are set up to transfer the authorization to drive the parking brake actuator (4, 5) that is connected in a driveable manner to the first and the second control device (2, 3) by exchanging a token (21, 22).

10. Braking system according to Claim 9, **characterized in that**, during a switch-on process, the first or the second control device (2, 3) receives the token (21, 22) which authorizes driving of the parking brake actuator (4, 5) that is connected in a driveable manner to the first and the second control device (2, 3), and the other control device (3, 2) does not receive a token (21, 22).

11. Braking system according to Claim 9 or 10, **characterized in that** the first and/or the second control device (2, 3) are/is set up to drive the parking brake actuator (4, 5) only when the control device (2, 3) itself has the token (21, 22) and the other control device (3, 2) does not have the token (21, 22).

12. Braking system according to one of the preceding claims, **characterized in that** four wheel speed sensors (23) are provided, which are each associated with one of four wheels of the motor vehicle, wherein the first or the second control device (2, 3) receives data from all four wheel speed sensors (23) and the other control device receives data from only two wheel speed sensors (23).

13. Braking system according to Claim 12, **characterized in that** a multiplexer (24) is provided for the data from two wheel speed sensors (23), which multiplexer, if there is no fault, feeds the data from the two wheel speed sensors (23) to the control device (2, 3) that receives data from all four wheel speed sensors (23) and, only if this control device (2, 3) fails, feeds the data from the two wheel speed sensors (23) to the control device (2, 3) that receives data from only two wheel speed sensors (23).

14. Braking system according to Claim 13, **characterized in that** the two wheel speed sensors (23) of the multiplexer (24) are associated with wheels arranged diagonally in relation to one another.

15. Method for controlling a braking system (1) with two parking brake actuators (4, 5) and two control devices (2, 3), wherein a first arbitration unit (9) of the first control device (2) receives first parking brake request data (11a) and ascertains from the received first parking brake request data (11a) whether a parking brake action should be carried out,
and a second arbitration unit (10) of the second control device (3) receives second parking brake request data (11b) and ascertains from the received second parking brake request data (11b) whether a parking brake action should be carried out,
wherein a result of the second arbitration unit (10) is fed to the input end of the first arbitration unit (9) as part of the first parking brake request data (11a) and
wherein a result of the first arbitration unit (9) is transmitted to a driver (14, 15) of the first and/or the second control device (2, 3) for driving the first and/or the second parking brake actuator (4, 5).

## Revendications

1. Système de freinage pour un véhicule automobile, possédant un premier actionneur de frein de stationnement (4) et un deuxième actionneur de frein de stationnement (5) ainsi qu'un premier contrôleur (2) et un deuxième contrôleur (3), lesquels possèdent respectivement un circuit pilote (14, 15) destiné à commander au moins le premier et/ou le deuxième actionneur de frein de stationnement (4, 5), le premier contrôleur (2) possédant une première unité d'arbitrage (9), laquelle est conçue pour recevoir des premières données de demande de frein de stationnement (11a) et pour déterminer, à partir des données de demande de frein de stationnement (11a) reçues, si une action de frein de stationnement doit être exécutée,
le deuxième contrôleur (3) possédant une deuxième unité d'arbitrage (10), laquelle est conçue pour recevoir des deuxièmes données de demande de frein de stationnement (11b) et pour déterminer, à partir des données de demande de frein de stationnement (11b) reçues, si une action de frein de stationnement doit être exécutée,
un résultat de la deuxième unité d'arbitrage (10) étant acheminé à la première unité d'arbitrage (9) du côté de l'entrée en tant que partie des premières données de demande de frein de stationnement (11a) et
un résultat de la première unité d'arbitrage (9) étant transmis au circuit pilote (14, 15) du premier et/ou du deuxième contrôleur (2, 3) en vue de commander le premier et/ou le deuxième actionneur de frein de stationnement (4, 5).

2. Système de freinage selon la revendication 1, **caractérisé en ce qu'**un commutateur de frein de stationnement est présent, dont l'état de commutation est acheminé à la première unité d'arbitrage (9) et/ou à la deuxième unité d'arbitrage (10) en tant que partie des premières et/ou deuxièmes données de demande de frein de stationnement (11a, 11b).

3. Système de freinage selon la revendication 1 ou 2, **caractérisé en ce que** le circuit pilote (14) du premier contrôleur (2) est uniquement conçu pour commander le premier actionneur de frein de stationnement (4) et le circuit pilote (15) du deuxième contrôleur (3) est uniquement conçu pour commander le deuxième actionneur de frein de stationnement (5).

4. Système de freinage selon la revendication 1 ou 2, **caractérisé en ce que** les circuits pilotes (14, 15) du premier contrôleur (2) et du deuxième contrôleur (3) sont respectivement conçus pour commander le premier et le deuxième actionneur de frein de stationnement (4, 5).

5. Système de freinage selon l'une des revendications précédentes, **caractérisé en ce que** les deux contrôleurs (2, 3) déterminent l'état des actionneurs de frein de stationnement (4, 5) respectivement associés et communiquent l'état déterminé à l'autre contrôleur (3, 2) respectif, les états des deux actionneurs de frein de stationnement (4, 5) étant notamment combinés en un état global dans le premier et/ou le deuxième contrôleur (2, 3).

6. Système de freinage selon l'une des revendications précédentes, **caractérisé en ce que** le premier contrôleur (2) et le deuxième contrôleur (3) communiquent entre eux par le biais d'une ligne de communication séparée (7) et/ou par un bus de véhicule.

7. Système de freinage selon l'une des revendications précédentes, **caractérisé en ce que** le premier contrôleur (2) et le deuxième contrôleur (3) échangent, notamment mutuellement, des informations de disponibilité (21, 22), le deuxième contrôleur (3) supposant une défaillance du premier contrôleur (2) lorsque l'information de disponibilité (21, 22) n'indique aucune disponibilité et/ou qu'aucune information de disponibilité (21, 22) n'est reçue.

8. Système de freinage selon l'une des revendications précédentes, **caractérisé en ce que** la deuxième unité d'arbitrage (10) est conçue pour, en cas de défaillance du premier contrôleur (2), communiquer le résultat de l'arbitrage au circuit pilote (15) du deuxième contrôleur (3) en vue de commander l'au moins un actionneur de frein de stationnement (5).

9. Système de freinage selon l'une des revendications précédentes, **caractérisé en ce qu'**au moins un actionneur de frein de stationnement (4, 5) est relié de manière à pouvoir être commandé aux premier et deuxième contrôleurs (2, 3), les premier et deuxième contrôleurs (2, 3) étant conçus pour transmettre l'autorisation de commander l'actionneur de frein de stationnement (4, 5) qui est relié de manière à pouvoir être commandé aux premier et deuxième contrôleurs (2, 3), par échange d'un jeton (21, 22).

10. Système de freinage selon la revendication 9, **caractérisé en ce que**, lors d'une opération d'enclenchement, le premier ou le deuxième contrôleur (2, 3) reçoit le jeton (21, 22), lequel accorde l'autorisation pour la commande de l'actionneur de frein de stationnement (4, 5) qui est relié de manière commandable au premier et au deuxième contrôleur (2, 3), et l'autre contrôleur (3, 2) ne reçoit pas de jeton (21, 22).

11. Système de freinage selon la revendication 9 ou 10, **caractérisé en ce que** le premier et/ou le deuxième contrôleur (2, 3) sont conçus pour ne commander l'actionneur de frein de stationnement (4, 5) que lorsque le contrôleur (2, 3) possède lui-même le jeton (21, 22) et que l'autre contrôleur (3, 2) ne possède pas le jeton (21, 22).

12. Système de freinage selon l'une des revendications précédentes, **caractérisé en ce que** quatre capteurs de vitesse de roue (23) sont présents, lesquels sont respectivement associés à l'une des quatre roues du véhicule automobile, le premier ou le deuxième contrôleur (2, 3) recevant des données de tous les quatre capteurs de vitesse de roue (23) et l'autre contrôleur recevant des données de deux capteurs de vitesse de roue (23) seulement.

13. Système de freinage selon la revendication 12, **caractérisé en ce qu'**un multiplexeur (24) pour les données de deux capteurs de vitesse de rotation de roue (23) est présent, lequel, en l'absence de défaut, achemine les données des deux capteurs de vitesse de rotation de roue (23) au contrôleur (2, 3) qui reçoit les données de tous les quatre capteurs de vitesse de rotation des roues (23) et, uniquement en cas de défaillance de ce contrôleur (2, 3), achemine les données des deux capteurs de vitesse de rotation des roues (23) au contrôleur (2, 3) qui reçoit les données de deux capteurs de vitesse de rotation des roues (23) seulement.

14. Système de freinage selon la revendication 13, **caractérisé en ce que** les deux capteurs de vitesse de roue (23) du multiplexeur (24) sont associés à des roues disposées en diagonale l'une par rapport à l'autre.

15. Procédé de régulation d'un système de freinage (1) comprenant deux actionneurs de frein de stationnement (4, 5) et deux contrôleurs (2, 3), une première unité d'arbitrage (9) du premier contrôleur (2) recevant des premières données de demande de frein de stationnement (11a) et déterminant, à partir des premières données de demande de frein de stationnement (11a) reçues, si une action de frein de stationnement doit être exécutée,
et une deuxième unité d'arbitrage (10) du deuxième contrôleur (3) recevant des deuxièmes données de demande de frein de stationnement (11b) et déterminant, à partir des deuxièmes données de demande de frein de stationnement (11b) reçues, si une action de frein de stationnement doit être exécutée,
un résultat de la deuxième unité d'arbitrage (10) étant acheminé à la première unité d'arbitrage (9) du côté de l'entrée en tant que partie des premières données de demande de frein de stationnement (11a) et
un résultat de la première unité d'arbitrage (9) étant transmis à un circuit pilote (14, 15) du premier et/ou du deuxième contrôleur (2, 3) en vue de commander le premier et/ou le deuxième actionneur de frein de stationnement (4, 5).
